# FASCICULE DE BREVET EUROPEEN

(11) **EP 1 725 425 B1**
(45) Date de publication et mention de la délivrance du brevet: **16.04.2008**
(21) Numéro de dépôt: 05717708.1
(22) Date de dépôt: 09.02.2005
(51) Int. Cl.: B60N 2/30

(54) **VEHICULE AUTOMOBILE COMPRENANT UN SIEGE ARRIERE REPLIABLE ET ESCAMOTABLE**
KRAFTFAHRZEUG MIT EINEM ZUSAMMENKLAPPBAREN UND VERSTAUBAREN RÜCKSITZ
MOTOR VEHICLE WITH A COLLAPSIBLE AND STOWABLE BACK SEAT

(30) Priorité: 10.02.2004 FR 0401288
(43) Date de publication de la demande: 29.11.2006
(73) Titulaire: Renault SAS, 92100 Boulogne Billancourt (FR)
(72) Inventeur: SOUVILLE, Philippe, F-78180 MONTIGNY LE BRETONNEUX (FR); MASSON, Xavier, F-78310 MAUREPAS (FR)
(86) Numéro de dépôt international: PCT/FR2005/050077
(87) Numéro de publication internationale: WO 2005/077708

(56) Documents cités:
- EP-A- 0 769 410
- EP-A- 0 958 960
- FR-A- 2 705 627
- US-A- 1 649 608
- US-A- 4 699 418
- US-A- 5 195 795
- US-A- 5 240 302
- US-A- 5 269 581
- US-A- 5 492 386
- US-A- 6 106 046
- US-A1- 2001 052 718
- US-A1- 2003 094 830
- US-A1- 2003 184 130

## Description

La présente invention concerne un véhicule automobile comprenant une paroi de plancher, au moins un siège avant et au moins un siège arrière, chaque siège comprenant une assise et un dossier, le siège arrière étant repliable et escamotable au moyen de bielles reliant l'assise au plancher.

L'invention concerne plus particulièrement un véhicule automobile comprenant un siège arrière individuel pouvant être rangé sous un siège avant, placé à côté du siège conducteur.

On connaît, par la demande de FR-A-2705627, un véhicule automobile équipé d'un siège escamotable comprenant un support de siège, fixé par l'intermédiaire de traverses sur une paroi de plancher, une assise mobile autour d'un premier axe de pivotement du support de siège situé vers l'avant et un dossier basculant autour d'un second axe de pivotement du support de siège situé vers l'arrière. Afin de prolonger un plancher de chargement, situé à l'arrière du siège escamotable, le dossier peut occuper une position de rangement à l'intérieur du support de siège, l'assise étant relevée au préalable et positionnée de manière sensiblement perpendiculaire par rapport à la paroi de plancher, en avant du support de siège.

Un tel véhicule automobile présente l'inconvénient de ne pas prévoir un rangement particulier de l'assise du siège. En effet, le siège est escamotable d'une position de rangement vers une position de rangement dans laquelle l'assise est située à l'avant du support de siège. L'espace de chargement se trouve ainsi limité par l'épaisseur de l'assise du siège, cette épaisseur étant, en outre, généralement importante afin d'assurer un confort d'assise pour l'occupant du siège et filtrer les vibrations pouvant être induites par le revêtement ou par les éléments de suspension du véhicule automobile.

On connaît également, par le brevet US 4 699 418, un véhicule automobile comprenant un siège arrière escamotable, comprenant une assise et un dossier, fixé sur une portion de rehaussement d'un plancher. Le siège arrière est adapté pour pouvoir passer d'une position d'utilisation à une position de rangement dans laquelle le dossier est replié sur l'assise, l'assise étant en contact avec le plancher. Le passage de la position d'utilisation à la position de rangement est réalisée par un ensemble de leviers et de bielles.

Un véhicule automobile comprenant un tel siège présente l'inconvénient de comprendre un ensemble complexe de leviers et de bielles afin de passer d'une position d'utilisation à une position de rangement.

On pourra également se référer au brevet US 5 492 386 décrivant un agencement de siège arrière et de siège avant d'un véhicule automobile, dans lequel le siège arrière, est apte à être rangé sous le siège avant. Un tel dispositif présente l'inconvénient de ne pas prévoir de dispositif mécanique permettant le passage d'une position d'utilisation à une position de rangement, ni de moyen permettant de relier le siège arrière au plancher du véhicule automobile dans une position de rangement. Compte tenu que le siège arrière dans une position de rangement n'est pas fixé sur le plancher du véhicule, il existé une probabilité de perte du siège arrière, par exemple lors du nettoyage du véhicule automobile, ou encore un risque de pincement d'un des membres d'un occupant du siège avant entre une armature du siège avant et le siège arrière lors d'un déplacement intempestif du siège arrière.

Du document US 1 649 608, on connait un véhicule automobile, qui montre les caractéristiques du préambule de la revendication 1.

La présente invention a donc pour objet de prévoir un véhicule automobile comprenant un siège arrière repliable et escamotable pouvant être rangé sous un siège avant de manière améliorée.

A cet effet, le véhicule automobile comprend une paroi de plancher, au moins un siège avant et au moins un siège arrière, chaque siège comprenant une assise et un dossier, le siège arrière étant repliable et escamotable au moyen de bielles reliant l'assise au plancher. Il comprend, en outre, un bac récepteur servant de support du siège avant en position surélevée par rapport à la paroi de plancher, ledit bac récepteur définissant un logement pour le siège arrière dans une position repliée, et une zone de rehaussement de la paroi de plancher sur laquelle le siège arrière est fixé.

Un tel véhicule comprenant un bac récepteur permet de rehausser le siège avant par rapport à la paroi de plancher, afin de libérer un espace suffisant pour recevoir le siège arrière dans une position de rangement, sans avoir à disposer sur les cotés d'importantes armatures d'assise pouvant être inesthétiques. En outre, les parois du bac récepteur protègent la matelassure du siège arrière, lorsque le siège arrière est dans une position de rangement.

Un tel véhicule présente l'avantage de nécessiter un nombre réduit de pièces pour ranger le siège arrière sous le siège avant. En effet, le passage d'une position d'utilisation du siège arrière à une position de rangement s'effectue par l'intermédiaire de bielles articulées sur l'assise du siège arrière et sur la paroi de plancher.

En outre, l'utilisation de bielles permet d'obtenir un siège arrière particulièrement facile à manipuler par un utilisateur, ne nécessitant pas d'effort particulier. Un utilisateur peut aisément réaliser l'opération de rangement du siège arrière avec une seule de ses mains.

Un tel agencement d'un siège arrière et d'un siège avant de véhicule automobile présente l'avantage d'être particulièrement économique et ne nécessite pas d'entretien spécifique.

Avec un tel véhicule, il devient également possible d'accroître sensiblement la surface de chargement. En effet, dans une position de rangement, le siège arrière se trouve dans une position repliée sous le siège avant. La zone de rehaussement, sur laquelle le siège arrière est fixé dans une position d'utilisation, est ainsi totalement dégagée. Il devient ainsi possible d'entreposer des objets jusqu'au dossier du siège avant.

Un tel véhicule présente l'avantage d'accoupler le siège arrière et le plancher du véhicule automobile de façon permanente même lorsque le siège arrière se trouve dans sa position de rangement. La probabilité de perte du siège se trouve ainsi sensiblement réduite.

Le siège arrière peut avantageusement comprendre de chaque côté de l'assise, une bielle pivotante articulée par une première extrémité sur la partie avant de l'assise et par une seconde extrémité sur la paroi de plancher.

Dans un tel véhicule, la bielle est adaptée pour adopter une première position angulaire dans laquelle l'assise du siège arrière est située en regard du second niveau et une seconde position angulaire dans laquelle au moins une partie de l'assise du siège arrière est située en regard de l'assise du siège avant.

Dans un mode de réalisation, la bielle est articulée par sa seconde extrémité sur une portion verticale reliant la zone de rehaussement du plancher à la paroi de plancher.

Avec un tel véhicule automobile, les bielles d'articulation du siège arrière ne sont pas visibles par l'occupant du siège. En effet, le siège arrière est monté sur la zone de rehaussement de la paroi de plancher, de façon que l'extrémité de l'assise soit décalée vers l'avant du véhicule, par rapport à la partie verticale de la paroi de plancher, la bielle étant articulée sous l'assise du siège arrière.

L'assise du siège arrière peut avantageusement être à la même hauteur que le rehaussement du plancher, lorsque le siège arrière est rangé à l'intérieur du bac récepteur.

Un tel véhicule comprend une surface de chargement agrandie, l'assise du siège pouvant prolonger le second niveau de la paroi de plancher.

Le bac récepteur peut avantageusement comprendre une ouverture de passage des pieds d'un occupant du siège arrière et/ou des glissières dans sa partie supérieure permettant un guidage en translation du siège avant.

Le bac récepteur peut comprendre un couvercle de fermeture constitué par l'assise du siège arrière. Le bac récepteur peut également comprendre des premiers moyens de verrouillage destinés à coopérer avec des moyens de verrouillage complémentaires du siège avant.

Dans un mode de réalisation, le dispositif comprend des seconds moyens de verrouillage destinés à coopérer avec des moyens de verrouillage complémentaires du siège arrière.

L'invention sera mieux comprise à l'étude de la description détaillée d'un mode de réalisation nullement limitatif illustré par les dessins annexés, sur lesquels :
- la figure 1 représente une vue schématique en coupe longitudinale de l'habitacle d'un véhicule automobile selon un aspect de l'invention, un siège arrière étant en position d'utilisation;
- la figure 2 représente une vue schématique en coupe longitudinale de l'habitacle d'un véhicule automobile selon un aspect de l'invention, un siège arrière étant en position de rangement sous un siège avant;
- la figure 3 représente une vue schématique en coupe longitudinale de l'habitacle d'un véhicule automobile selon un aspect de l'invention, un siège arrière étant dans une position transitoire; et
- la figure 4 représente une vue en coupe transversale partielle selon l'axe IV-IV de la figure 1 d'un siège arrière d'un véhicule automobile selon un aspect de l'invention.

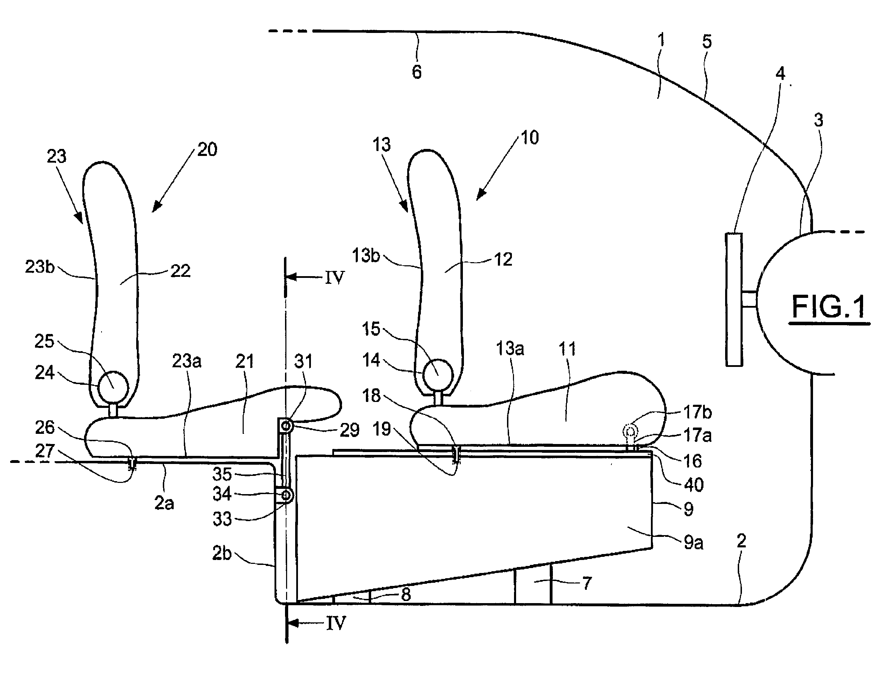

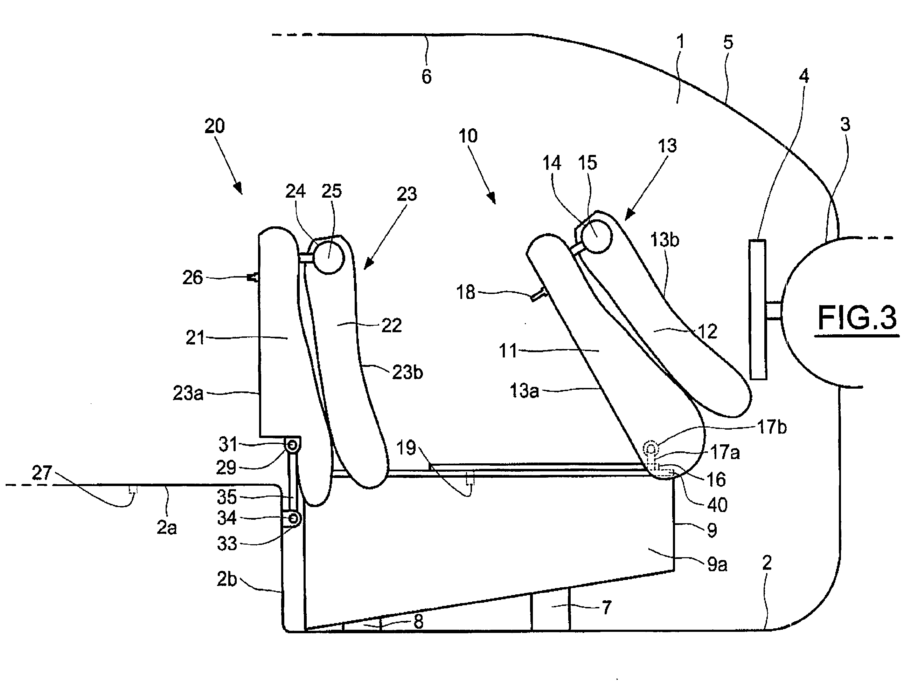

Sur les figures 1 à 3, un habitacle 1 d'un véhicule automobile, représenté partiellement, est délimité par une paroi de plancher 2, un tableau de bord 3 muni d'un volant 4, un pare-brise avant 5 et un toit 6. La paroi de plancher 2 est prolongée, du côté opposé au volant 4, par une zone de rehaussement 2a, par l'intermédiaire d'une portion sensiblement verticale 2b.

La paroi de plancher 2 comprend deux traverses 7 et 8 espacées entre elles, sur lesquelles est fixé un bac récepteur 9 comprenant un siège avant passager, référencé 10 dans son ensemble, et décalé latéralement vers la droite par rapport au volant 4.

Le siège 10 comprend une assise 11 et un dossier 12. Une armature 13 du siège 10 comprend une armature d'assise 13a s'étendant sensiblement horizontalement et une armature de dossier 13b s'étendant sensiblement verticalement. Le dossier 12 est relié à l'assise 11 par une liaison articulée 14 selon un axe transversal 15.

L'armature d'assise 13a est reliée au bac récepteur 9, de forme générale en U, par l'intermédiaire de glissières 16 situées à chaque extrémité supérieure des portions latérales 9a du bac récepteur 9, coopérant avec des rails de guidage 40 afin de permettre un coulissement longitudinal du siège 10 vers l'avant ou vers l'arrière de l'habitacle 1. Les rails de guidage 40 peuvent être disposés sur toute la longueur du bac récepteur 9.

Les glissières 16 comprennent à leurs extrémités dirigées vers l'avant de l'habitacle 1, des saillies 17a s'étendant en direction du siège 11. Un axe de liaison 17b relié à l'armature d'assise 13a et perpendiculaire par rapport aux glissières 16 est fixé au niveau des saillies 17a. Le siège avant 10 est ainsi susceptible de basculer vers l'avant autour de l'axe de liaison 17b. L'armature d'assise 13a comprend dans sa partie arrière des moyens de verrouillage 18 apte à coopérer avec des moyens de verrouillage complémentaires 19 des glissières 16 du bac récepteur 9, les moyens de verrouillage 18 et 19, de conception connue, pouvant notamment comprendre un verrou et des gâches (non représentés).

La zone de rehaussement 2a comprend un siège arrière passager individuel, référencé 20 dans son ensemble, et aligné longitudinalement avec le siège avant 10.

Le siège 20 comprend une assise 21 et un dossier 22. Une armature 23 du siège 20 comprend une armature d'assise 23a s'étendant sensiblement horizontalement et une armature de dossier 23b s'étendant sensiblement verticalement. Le dossier 22 est relié à l'assise 21 par une liaison articulée 24 selon un axe transversal 25.

L'armature d'assise 23a comprend dans sa partie arrière des moyens de verrouillage 26 apte à coopérer avec des moyens de verrouillage complémentaires 27 de la zone de rehaussement 2a.

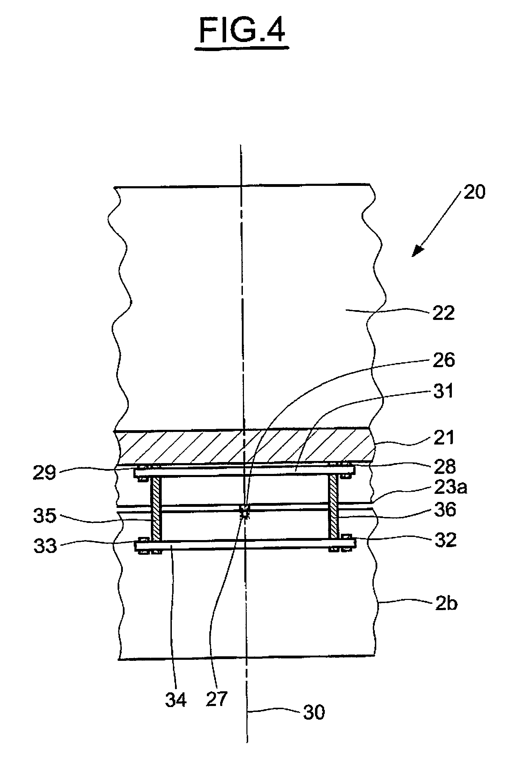

L'armature d'assise 23b comprend dans sa partie avant deux premières saillies 28 et 29 (figure 4), situées symétriquement par rapport à un axe médian 30 (figure 4) du siège 20, munis de perçages (non représentés). Un premier axe d'articulation 31, s'étendant suivant son axe, est positionné de façon sensiblement horizontal par rapport à l'armature d'assise 23a par l'intermédiaire des premières saillies 28 et 29 (figure 4).

La portion verticale 2b reliant la zone de rehaussement 2a et la paroi de plancher 2, sur laquelle le bac support 9 est fixé, comprend deux secondes saillies 32 et 33 (figure 4) munis de perçages (non représentés), situées également symétriquement par rapport à l'axe médian 30 (figure 4), et décalé verticalement vers le bas par rapport aux premières saillies 28 et 29. Le siège arrière 20 est disposé de manière telle que les premières saillies 28 et 29 sont légèrement décalées vers l'avant par rapport à la portion verticale 2b. Un second axe d'articulation 34 est positionné de façon sensiblement parallèle par rapport au premier axe d'articulation 31 au niveau des perçages des saillies 32 et 33 (figure 4).

Une première et une seconde bielle, respectivement 35 et 36 (figure 4), sont reliées au premier et au second axe d'articulation 31 et 34, de façon sensiblement verticale. La première bielle 35 est articulée par une première extrémité sur le premier axe d'articulation 31 et par une seconde extrémité au second axe d'articulation 34 à proximité des saillies 29 et 33. D'une manière analogue, la seconde bielle 36 est articulée sur le premier axe d'articulation 31 et sur le second axe d'articulation 34 à proximité des saillies 28 et 32.

Lorsque le siège arrière est dans une position d'utilisation, les bielles 35 et 36 sont sensiblement verticales.

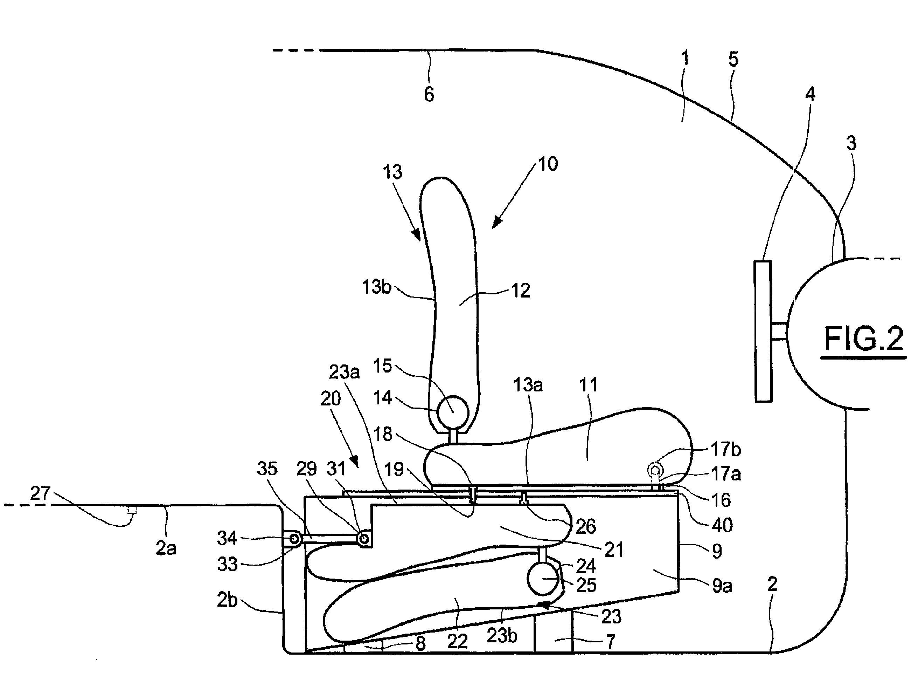

Le passage d'une position d'utilisation (figure 1) du siège arrière 20 à une position de rangement (figure 2) s'effectue de la manière suivante : on replie respectivement sur les assises 21 et 11, le dossier 22 du siège arrière 20 ainsi que le dossier 12 du siège avant 10, on bascule le siège avant 10 vers l'avant, puis on effectue une rotation du siège 20 autour du second axe d'articulation 34 jusqu'à ce que le dossier 22 vienne en contact avec le fond du bac de support 9.

Dans cette position de rangement, les bielles 35 et 36 sont sensiblement horizontales et l'armature d'assise 23a est sensiblement au même niveau que le second niveau 2b de la paroi de plancher 2, le bac récepteur 9 étant bien entendu agencé de façon que le siège arrière 20 soit positionné entièrement à l'intérieur.

Dans cette position de rangement, le siège 20 arrière peut également être disposé entièrement sous le siège avant 10.

Afin de préserver le siège arrière 20 des salissures dans une position rangée, il est possible de recouvrir l'arrière du dossier 22 avec un matériau facilement lavable et imperméable, par exemple du caoutchouc. En effet, lorsque le siège arrière est dans une position d'utilisation, un occupant du siège arrière met ses pieds à l'intérieur du bac de support 9.

Bien entendu, il peut être également envisageable de réaliser un véhicule automobile comprenant une rangée de sièges arrières adoptant une position de rangement sous le siège passager avant et sous le siège conducteur en modifiant légèrement l'intérieur de l'habitacle d'un véhicule automobile, notamment la localisation du frein à main.

Avec un tel véhicule automobile, il est ainsi possible de ranger entièrement le siège arrière sous le siège avant dans un bac récepteur prévu à cet effet, et de libérer ainsi un espace important à l'arrière du véhicule d'une manière particulièrement simple.

## Revendications

1. Véhicule automobile comprenant une paroi de plancher (2), au moins un siège avant (10) et au moins un siège arrière (20), chaque siège comprenant une assise (11, 21), un dossier (12, 22), le siège arrière (20) étant repliable et escamotable au moyen de bielles (35, 36) reliant l'assise (21) au plancher (2), ledit véhicule automobile comprenant un bac récepteur (9) définissant un logement pour le siège arrière (20) dans une position repliée, et une zone de rehaussement (2a) de la paroi de plancher sur laquelle le siège arrière (20) est fixé, **caractérisé par le fait que** le bac récepteur (9) sert de support du siège avant (10) en position surélevée par rapport à la paroi de plancher (2).

2. Véhicule selon la revendication 1, **caractérisé par le fait que** le siège arrière (20) comprend de chaque côté de l'assise (21), une bielle pivotante (35,36) articulée par une première extrémité sur la partie avant de l'assise et par une seconde extrémité sur la paroi de plancher (2).

3. Véhicule selon la revendication 2, **caractérisé par le fait que** les bielles (35, 36) sont articulées par leurs secondes extrémités sur une portion verticale (2b) reliant la zone de rehaussement (2a) du plancher à la paroi de plancher (2).

4. véhicule selon l'une quelconque des revendications précédentes, **caractérisé par le fait que** l'assise (21) du siège arrière (20) est à la même hauteur que le rehaussement (2a) du plancher, lorsque le siège arrière (20) est rangé à l'intérieur du bac récepteur (9).

5. Véhicule selon l'une quelconque des revendications précédentes, **caractérisé par le fait que** le bac récepteur (9) comprend une ouverture de passage des pieds d'un occupant du siège arrière (20).

6. Véhicule selon l'une quelconque des revendications précédentes, **caractérisé par le fait que** le bac récepteur (9) comprend des glissières dans sa partie supérieure permettant un guidage en translation du siège avant (10).

7. Véhicule selon l'une quelconque des revendications précédentes, **caractérisé par le fait que** le bac récepteur (9) comprend un couvercle de fermeture constitué par l'assise (21) du siège arrière (20).

8. Véhicule selon l'une quelconque des revendications précédentes, **caractérisé par le fait que** le bac récepteur (9) comprend des premiers moyens de verrouillage (19) destinés à coopérer avec des moyens de verrouillage (18) complémentaires du siège avant (10).

9. Véhicule selon l'une quelconque des revendications précédentes, **caractérisé par le fait qu'**il comprend des seconds moyens de verrouillage (27) destinés à coopérer avec des moyens de verrouillage (26) complémentaires du siège arrière (20).

## Claims

1. Motor vehicle comprising a floor (2), at least one front seat (10) and at least one back seat (20), each seat comprising a horizontal squab (11, 21) and a backrest (12, 22), the back seat (20) being collapsible and stowable by means of links (35, 36) connecting the horizontal squab (21) to the floor (2), and said motor vehicle comprising a receiving tray (9) defining a housing for the back seat (20) in a collapsed position, and a raised section (2a) of the floor to which the back seat (20) is fixed, the vehicle being **characterized in that** the receiving tray (9) acts as a support for the front seat (10) in an elevated position above the floor (2).

2. Vehicle according to Claim 1, **characterized in that** the back seat (20) comprises, on either side of the horizontal squab (21), a pivoting link (35, 36) hinged at one end to the front part of the squab and at a second end to the floor (2).

3. Vehicle according to Claim 2, **characterized in that** the links (35, 36) are hinged at their second ends to a vertical portion (2b) connecting the raised floor section (2a) to the floor (2).

4. Vehicle according to any one of the preceding claims, **characterized in that** the horizontal squab (21) of the back seat (20) is at the same height as the raised floor (2a) when the back seat (20) is stored inside the receiving tray (9).

5. Vehicle according to any one of the preceding claims, **characterized in that** the receiving tray (9) comprises an opening for the feet of an occupant of the back seat (20).

6. Vehicle according to any one of the preceding claims, **characterized in that** the receiving tray (9) comprises rails in its upper part, allowing translational guidance of the front seat (10).

7. Vehicle according to any one of the preceding claims, **characterized in that** the receiving tray (9) comprises a closing lid in the form of the horizontal squab (21) of the back seat (20).

8. Vehicle according to any one of the preceding claims, **characterized in that** the receiving tray (9) comprises first locking means (19) designed to engage with complementary locking means (18) of the front seat (10).

9. Vehicle according to any one of the preceding claims, **characterized in that** it comprises second locking means (27) designed to engage with complementary locking means (26) of the back seat (20).

## Patentansprüche

1. Kraftfahrzeug, das eine Bodenwand (2), wenigstens einen Vordersitz (10) und wenigstens einen Rücksitz (20) enthält, wobei jeder Sitz eine Sitzfläche (11, 21) und eine Rückenlehne (12, 22) aufweist, wobei der Rücksitz (20) zusammenklappbar und mittels Stangen (35, 36), die die Sitzfläche (21) mit dem Boden (2) verbinden, einfahrbar ist, wobei das Kraftfahrzeug einen Aufnahmekasten (9), der einen Aufnahmeraum für den Rücksitz (20) in einer zusammengeklappten Position definiert, und eine Erhöhungszone (2a) der Bodenwand, auf der der Rücksitz (20) befestigt ist, enthält, **dadurch gekennzeichnet, dass** der Aufnahmekasten (9) als Träger des Vordersitzes (10) in einer in Bezug auf die Bodenwand (2) erhöhten Position dient.

2. Fahrzeug nach Anspruch 1, **dadurch gekennzeichnet, dass** der Rücksitz (20) auf jeder Seite der Sitzfläche (21) eine Schwenkstange (35, 36) aufweist, die durch ein erstes Ende an dem vorderen Teil des Sitzes und durch ein zweites Ende an der Bodenwand (2) angelenkt ist.

3. Fahrzeug nach Anspruch 2, **dadurch gekennzeichnet, dass** die Stangen (35, 36) durch ihre zweiten Enden an einem vertikalen Abschnitt (2b) angelenkt sind, der die Erhöhungszone (2a) des Bodens mit der Bodenwand (2) verbindet.

4. Fahrzeug nach einem der vorhergehenden Ansprüche, **dadurch gekennzeichnet, dass** sich die Sitzfläche (21) des Rücksitzes (20) auf derselben Höhe wie die Erhöhungszone (2a) des Bodens befindet, wenn der Rücksitz (20) in dem Aufnahmekasten (9) untergebracht ist.

5. Fahrzeug nach einem der vorhergehenden Ansprüche, **dadurch gekennzeichnet, dass** der Aufnahmekasten (9) eine Öffnung enthält, in die eine auf dem Rücksitz (20) sitzende Person ihre Füße bewegen kann.

6. Fahrzeug nach einem der vorhergehenden Ansprüche, **dadurch gekennzeichnet, dass** der Aufnahmekasten (9) in seinem oberen Teil Gleitschienen aufweist, die eine translatorische Führung des Vordersitzes (10) ermöglichen.

7. Fahrzeug nach einem der vorhergehenden Ansprüche, **dadurch gekennzeichnet, dass** der Aufnahmekasten (9) einen Verschlussdeckel enthält, der durch die Sitzfläche (21) des Rücksitzes (20) gebildet ist.

8. Fahrzeug nach einem der vorhergehenden Ansprüche, **dadurch gekennzeichnet, dass** der Aufnahmekasten (9) erste Verriegelungsmittel (19) aufweist, die dazu bestimmt sind, mit komplementären Verriegelungsmitteln (18) des Vordersitzes (10) zusammenzuwirken.

9. Fahrzeug nach einem der vorhergehenden Ansprüche, **dadurch gekennzeichnet, dass** es zweite Verriegelungsmittel (27) aufweist, die dazu bestimmt sind, mit komplementären Verriegelungsmitteln (26) des Rücksitzes (20) zusammenzuwirken.
